# EUROPÄISCHE PATENTSCHRIFT

(11) **EP 3 573 737 B1**
(45) Veröffentlichungstag und Bekanntmachung des Hinweises auf die Patenterteilung: **07.12.2022**
(21) Anmeldenummer: 18700908.9
(22) Anmeldetag: 18.01.2018
(51) Int. Cl.: B01D 46/00, B01D 46/44

(54) **VERFAHREN ZUR DETEKTION EINER FILTERVERSTOPFUNG**
METHOD FOR DETECTING FILTER CLOGGING
PROCÉDÉ DE DÉTECTION D'UN COLMATAGE DE FILTRE

(30) Priorität: 30.01.2017 DE 102017101695
(43) Veröffentlichungstag der Anmeldung: 04.12.2019
(60) Teilanmeldung: 22194635.3
(73) Patentinhaber: ebm-papst Mulfingen GmbH & Co. KG, 74673 Mulfingen (DE)
(72) Erfinder: WYSTUP, Ralph, 74653 Künzelsau (DE); HUMM, Markus, 74679 Weißbach (DE)
(74) Vertreter: Staeger & Sperling Partnerschaftsgesellschaft mbB
(86) Internationale Anmeldenummer: PCT/EP2018/051169
(87) Internationale Veröffentlichungsnummer: WO 2018/137988

(56) Entgegenhaltungen:
- EP-A1- 2 141 038
- WO-A1-02/19511
- WO-A1-2006/033027
- DE-A1- 4 037 685
- JP-A- H10 160 228
- JP-A- 2015 030 564
- KR-B1- 100 632 148

## Beschreibung

Die Erfindung betrifft ein Verfahren zur Detektion und Messung einer Filterverschmutzung.

In lufttechnischen Anlagen werden neben Ventilatoren typischerweise Filter zur Luftreinigung eingesetzt. Bei vielen Geräten kann der Anwender von außen nicht ohne weiteres feststellen ob der Filter bereits so verschmutzt oder mit Schmutzpartikeln zugesetzt ist, dass er gereinigt oder ausgetauscht werden müsste.

Die Feststellung und Messung der Filterverschmutzung wird im Stand z. B. mit zusätzlichen Sensoren oder Einrichtungen durchgeführt, wie z. B. mit einem Infrarotsensor zur Messung der Filterverschmutzung. Mit einem Infrarotfilter wird der Verschmutzungsgrad z. B. in der Weise gemessen, dass eine Infrarotlichtquelle in den Filter hineinstrahlt und auf der gegenüberliegenden Seite durch den dort angebrachten Reflektionsspiegel zurückgeworfen und gemessen wird. Ist der Filter wenig verschmutzt wird viel Licht reflektiert, ist er stark verschmutzt kommt am Messpunkt kaum noch Licht an. Aus dieser Differenz der Strahlungsstärke errechnet die Elektronik den Grad der Verschmutzung. Wird kein Licht mehr reflektiert, schaltet sie z. B. auch die Stromversorgung des Ventilators in dem betroffenen Luftkanal ab.

Eine andere Methode ist die Differenzdruckmessung vor und nach dem Filter, wobei sich der Differenzdruck mit zunehmender Filterverschmutzung messen lässt und daraus Rückschlüsse auf den Grad der Verschmutzung ergeben. Nachteilig ist dabei, dass es zusätzlicher Messeinrichtungen bedarf und sich der Differenzdruck auch auf Grund anderer strömungstechnischer Einflüssen ändern kann.

Aus der JP H 160228 A ist ein Verfahren für ein Klimagerät mit einem Ventilator bekannt, bei dem eine Filterverschmutzung möglichst ohne zusätzlichen Sensor möglich ist, wobei eine Rückkopplungssteuerung vorgesehen ist und Steuersignale verglichen werden und auf der Grundlage des Vergleichsergebnisses von einem Entscheidungsteil entschieden wird, ob der Filter verstopft ist oder nicht.

Aus der WO 02/19511 A1 ist eine Lösung bekannt, wie aus dem Anstieg der Drehzahl eines Ventilators eine Aussage über das Vorhandensein einer Filterverschmutzung eines Filters im Strömungskanal des Ventilators ermittelt werden kann.

Aus der DE 4037685 A1 ist eine Filterkontrolleinrichtung für Innenraum-Luftfilter von Kraftfahrzeugen mit einem elektrischen Gebläsemotor mit einem in dessen Ansaugbereich angeordneten Filter bekannt, einer elektronischen Gebläsemotordrehzahlsteuerung. Die Gebläsemotordrehzahlsteuerung und eine Klimaregelungseinheit sind an Ausgängen einer zentralen Steuereinheit angeschlossen, über die mittels eines Steuerprogramms ein automatischer Filterkontrollvorgang durchführbar ist und an deren Eingänge über Analog/Digitalwandler Signalaufbereitungseinrichtungen sowie ein Anlassstrommesser angeschlossen sind. Hierzu sind ebenfalls gesonderte Mess- und Steuerungseinrichtungen notwendig, die es bereits aus Kostengründen zu vermeiden gilt.

Der Filterverschmutzungsgrad beeinflusst ferner das erforderliche Drehmoment des Ventilators in einer lufttechnischen Anlage, so dass die Motorparameter permanent verändert werden müssen und der Ventilator auch zunehmend in einem weniger optimalen Betriebsbereich arbeitet.

Der Erfindung liegt deshalb die Aufgabe zugrunde, vorbesagte Nachteile zu überwinden und ein einfaches, kostengünstiges Konzept für die Detektion und/oder Messung einer Filterverschmutzung vorzusehen, welches mit einer geringen Anzahl an Komponenten realisierbar ist.

Diese Aufgabe wird durch die Merkmalskombination gemäß Anspruch 1 gelöst.

In einem geschlossenen Luftströmungskanal oder Raum baut ein Ventilator, wie z. B. ein Radialventilator einen Druck auf ("Druckspeicher"), im Leerlauf kann sich dieser Druck wieder entspannen und wirkt sich so auf das Bremsverhalten des Ventilators aus. Je nach Verschmutzungsgrad und Luftdurchlass des Filters wird der Druck schneller oder langsamer auf- und abgebaut.

Ein Grundgedanke der vorliegenden Erfindung besteht darin, dass ein Detektionsverfahren zum Erkennen einer Filterverschmutzung eines Luftfilters in einem Strömungsbereich eines Ventilators vorzusehen, bei dem der Zusammenhang der Leistungsaufnahme des Ventilators und dessen Ist- Ansteuerungsgrad (PWM-Austeuerung) sowie die Ist-Drehzahl dazu verwendet werden einen Rückschluss auf die Filterverschmutzung zu ziehen.

Die Bestimmung der Leistungsaufnahme des Ventilators kann, sofern eine integrierte Messschaltung zu ungenau arbeitet, durch eine hinterlegte Kennlinie kompensiert und damit präzisiert werden. Hierzu fährt der Ventilator bei seiner Inbetriebnahme mit sauberem Filter seine Ventilator-Kennlinie ab und zeichnet dabei eine ausreichende Anzahl von Ist-Drehzahl und Ist-Aussteuergraden als Wertepaare auf. Das Einmessen einer Kennlinie kann alternativ durch Einspielen einer vorhandenen Kennlinie z.B. über einen Datenbus erfolgen, indem entsprechend für die Einbausituation und die gewählte Filtertype passende Daten aus einer Datenbank verwendet werden.

Es wird in dem erfindungsgemäßen Verfahren die Zwischenkreisspannung und der Zwischenkreisstrom erfasst. Diese Daten werden in einem Speicher des Ventilators gespeichert und daraus kann unmittelbar ein Rückschluss auf die Filterverschmutzung gezogen werden.

Ein positiver Nebeneffekt des erfindungsgemäßen Verfahrens liegt darin, dass der Alterungsprozess des Ventilators verlangsamt wird. Zur Alterung zählt beispielsweise der Verschleiß des Lagers, wofür es heutzutage bereits entsprechende Lebensdauerberechnungsmodelle gibt. Alternativ können auch Lagerlebensdauer bestimmende Parameter mittels entsprechender Sensoren gemessen werden.

Bei dem erfindungsgemäßen Verfahren vergleicht der Ventilator im laufenden Betrieb die aktuelle Ist-Drehzahl und den Ist-Aussteuergrad mit den entsprechenden gespeicherten Soll-Daten. Erfindungsgemäß findet damit ein Wertepaarvergleich statt. Weicht der zu einem gespeicherten Drehzahlwert entsprechend gespeicherte Aussteuergrad zum aktuellen Ist-Aussteuergrad des aktuellen Ist-Drehzahlwertes weiter als ein vorgegebener zulässiger Abweichungswert ab, wird dieser Zustand als Filterverschmutzung gewertet, da bei einer Filterverschmutzung der Aussteuergrad erhöht werden muss, um zu einer gewünschten Drehzahl zu gelangen, die bei einem nicht oder weniger verschmutztem Filter vorläge.

Mittels Erfassung der Zwischenkreisspannung und des Zwischenkreisstroms, ist es möglich das Verfahren weiter abzusichern und Festzustellen, ob die Abweichung nicht vom Ventilator (z. B. Lagerschaden) oder aus der Ansteuerungsschaltung für den Ventilator stammt. Für den Grad der erlaubten Abweichung wird erfindungsgemäß ein Toleranzband mit Maximalwerten und Minimalwerten definiert.

Die Meldung eines verschmutzten Filters kann als Warnung auf dem Bus, als Blinkcode einer LED oder als gesetztes Fehlermelderelais erfolgen. Das Fehlersignal kann über eine geeignete Schnittstelle auch nach Extern ausgegeben werden.

Durch das erfindungsgemäße Verfahren wird eine aufwendige und möglicherweise anfällige Sensorik überflüssig, die zudem kostentreibend ist. Die erfindungsgemäße Lösung sieht dagegen lediglich eine Auswerteeinheit vor, in der Zusammenhänge zwischen Drehzahl und Aussteuerungsgrad, sowie optional noch der Zwischenkreisspannung und dem Zwischenkreisstrom genutzt werden.

Gemäß der Idee der Erfindung kann der Verschmutzungsgrad berechnet werden, wenn die Abweichung der Ist-Werte von den Soll-Werten ein lineares Verhalten aufweist und die absolute Abweichung ermittelt wird. Der so ermittelte Wert kann über einen Datenbus abfragbar sein oder als analoges Spannungssignal an einem Signalausgang anliegen. Bevorzugt würde eine niedrige Spannung als geringe Verschmutzung und eine max. zulässige Spannung des Analogsignals als maximal zulässige Verschmutzung gewertet.

Die zeitdiskrete oder kontinuierliche Erfassung der Werte über die Zeit kann ebenfalls ausgewertet werden und aus der Ableitung nach der Zeit kann auch eine schleichende Veränderung der Filterverschmutzung bis zu einem maximalen zulässigen Verschmutzungsgrad detektiert werden. Ist dabei die erste Ableitung nach der Zeit in etwa konstant, so lässt sich daraus eine kontinuierliche und zunehmende Filterverschmutzung ableiten.

In einer alternativen Ausgestaltung der Erfindung kann vorgesehen sein, die Drehrichtung des Ventilators für eine definierte Zeit umzukehren und dabei werden kontinuierlich der Ist-Aussteuerungsgrad, die Ist-Drehzahl und der Zwischenkreisstrom und die Zwischenkreisspannung aufgezeichnet.

Hierbei wird Änderungsrate des PWM-Signal beim Freiblasen des Filters während des Rückwärtsbetriebs ausgewertet, wobei durch Einbeziehung der spezifischen Parameter des Ventilators der Umstand kompensiert wird, dass Lüfterräder typischerweise auf Vorwärtsdrehrichtung technisch optimiert sind und die Ventilatoren in der Rückwärtsdrehrichtung daher nur eine eingeschränkte Luftperformance erzielen.

Eine nicht erfindungsgemäße Lösung sieht vor, dass durch eine gezielte Modulation des Motorstromes mit einem in Phase und Amplitude bekannten sinusförmigen Trägersignal, der Ventilator mithilfe seiner Flügel als Lautsprecher verwendet werden kann. Es ist die Eigenschaft eines Lautsprechers, dass dieser auch Schwingungen, somit Töne empfangen kann. Die vom Ventilator empfangenen Töne äußern sich wiederum in Änderungen des Motorstromes, insofern dass zu den ausgesendeten Signalen eine Phasenverschiebung und Amplitudenreduktion im Motorstrom auftritt. Ein Filter dämpft nun in Abhängigkeit seiner Verschmutzung diese Ultraschallsignale, so dass das empfangene Signal sowohl in Amplitude als auch in der Phasenlage eine Information über den Verschmutzungsgrad bietet. Die Auswertung der Signale im Strom des Motors des Ventilators kann beispielsweise durch Korrelation des gesendeten mit dem Empfangen Signal erfolgen. Durch eine Variation der Sendefrequenz können dabei auch Störsignale ausgeblendet werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine schematische Ansicht einer Vorrichtung und
- Fig. 2: eine schematische Darstellung der Schritte des erfindungsgemäßen Verfahrens.

Im Folgenden wird die Erfindung anhand eines exemplarischen Ausführungsbeispiels beschrieben, wobei gleiche Bezugszeichen auf gleiche strukturelle und/oder funktionale Merkmale hinweisen.

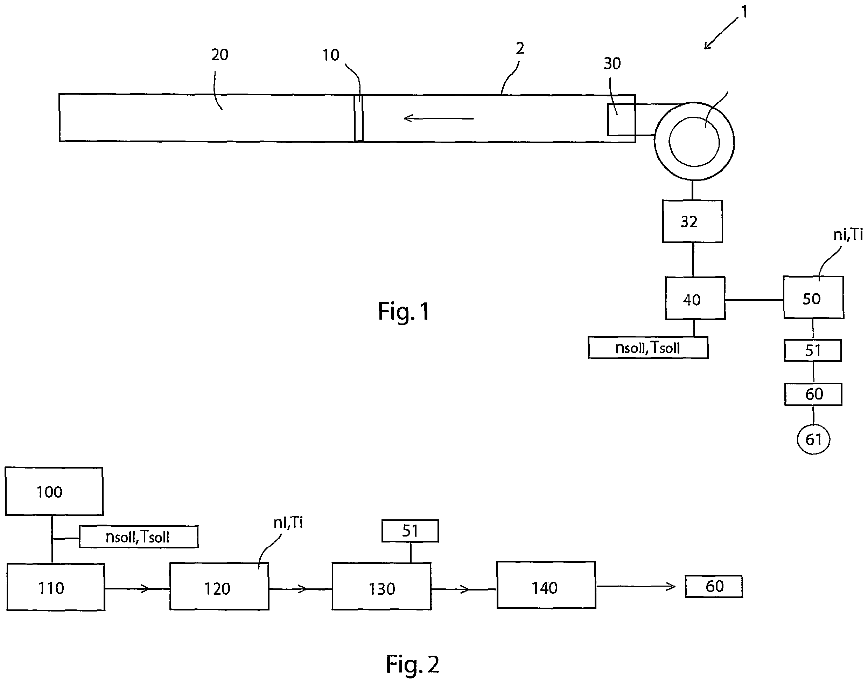

Die Fig. 1 zeigt eine schematische Ansicht einer Vorrichtung 1 zum Detektieren einer Filterverschmutzung in der Filteranlage 2, wobei die Filteranlage 2 aus wenigstens einem in einer Luftführung 20 installierten Luftfilter 10 und einem elektrisch angesteuerten Ventilator 30 zum Erzeugen eines Luftstroms in der Luftführung 20 besteht. Die Vorrichtung 1 verfügt über eine Motorsteuerung 40 zum Ansteuern des Ventilator-Motors, wobei zur Drehzahlregelung eine PWM-Ansteuerung 32 vorgesehen ist. Ferner ist eine Auswerteeinrichtung 50 zur Ermittlung Ist-Drehzahl nᵢ des Ventilators 30 in Abhängigkeit vom Ist-Aussteuergrades (Tastgrad) des Motorstroms zur Erzielung der aktuellen Drehzahl nᵢ vorgesehen.

In der Auswerteeinrichtung 50 sind ferner Sollwertpaare n_{Soll}, T_{Soll} für die Soll-Drehzahl n_{Soll} der Filteranlage 2 bei einem bestimmten Aussteuergrad T_{Soll} hinterlegt. Darüber hinaus ist in der Vorrichtung ein Komparator 51 vorgesehen, um die jeweiligen Ist-Wertepaare nᵢ, Tᵢ mit den hinterlegten Soll-Wertepaaren n_{Soll}, T_{Soll} zu vergleichen und daraus den Grad der Filterverschmutzung des Luftfilters 10 zu ermitteln. Sobald die Abweichung größer ist wie ein vorgegebener Grenzwert in einem Toleranzband, wird über die Schnittstelle 60 ein Signal an die LED-Leuchte 61 ausgegeben, wie eine unzulässige Filterverschmutzung anzeigt.

In der Fig. 2 ist eine schematische Darstellung der Schritte des erfindungsgemäßen Detektionsverfahren zum Ermitteln einer Filterverschmutzung einer Filteranlage gezeigt, welches mit der Vorrichtung nach Fig. 1 durchgeführt werden kann. Bei dem Verfahren sind die folgenden Schritte vorgesehen.

Zunächst erfolgt in einem Schritt 100, das Erfassen oder Einspielen der Motorkennlinie betreffend der Drehzahl in Abhängigkeit vom Aussteuergrad in der Filteranlage 2 bei dem der Luftfilter 10 unverschmutzt ist, so z. B. beim Einfahren der Anlage oder bei einem Filterwechsel.

Diese Werte-Paare werden in dem Schritt 110 als Sollwertepaaren n_{Soll}, T_{Soll} in einem Datenspeicher der Vorrichtung 1 hinterlegt.

Beim Betrieb der Anlage erfolgt in einem Schritt 120 das jeweilige Ermitteln der Ist-Drehzahl nᵢ des Ventilators 30 und des Ist-Aussteuergrades Tᵢ des Motorstroms zur Erzielung der aktuellen Ist-Drehzahl nᵢ.

In einem weiteren Schritt 130 erfolgt ein Vergleich der Ist-Wertepaare nᵢ, Tᵢ mit dem Komparator 51 der Vorrichtung 1 mit den hinterlegten Sollwertepaaren n_{Soll}, T_{Soll}.

Nachfolgend, in dem Schritt 140 erfolgt dann die Bestimmung ob die ermittelte Abweichung der Ist-Wertepaare nᵢ, Tᵢ von den Sollwertepaaren n_{Soll}, T_{Soll} eine maximale vorbestimmte Abweichung übersteigt. Die Abweichung kann dabei als Bandabweichung in einem zulässigen Toleranzband ermittelt werden, wobei entweder die Drehzahl bei einer bestimmten Leistungsaufnahme und damit einem bestimmten Tastgrad zu niedrig ist oder ob ein zu hoher Tastgrad notwendig ist, um eine bestimmte Drehzahl zu erzielen. Insbesondere, wenn die Abweichung der Ist-Werte von den Soll-Werten ein lineares Verhalten über die Zeit aufweist, lässt sich aus der zunehmenden Abweichung nicht nur die aktuelle Filterverstopfung, sondern auch der Zeitpunkt der maximal zulässigen Verschmutzung vorherberechnen, an dem ein Filterwechsel stattfinden sollte.

### Zusammenfassung:

Die Erfindung betrifft Detektionsverfahren zum Ermitteln einer Filterverschmutzung einer Filteranlage bestehend aus wenigstens einem in einer Luftführung (20) installierten Luftfilter (10) und einem elektrisch mittels einer PWM-Ansteuerung (32) angesteuerten Ventilator (30) zum Erzeugen eines Luftstroms in der Luftführung (20), wobei eine Motorsteuerung (40) und eine Auswerteeinrichtung (50) vorgesehen sind, mit den folgenden Schritten:
a. Ermitteln einer Ist-Drehzahl (nᵢ) des Ventilators (30) und
b. Ermitteln eines Ist-Aussteuergrades (Tᵢ) des Motorstroms zur Erzielung der Ist-Drehzahl (nᵢ) und
c. Vergleich der Ist-Wertepaare (nᵢ, Tᵢ) mit hinterlegten Sollwertepaaren (n_{Soll}, T_{Soll}) und
d. Bestimmung ob eine Abweichung der Ist-Wertepaare (nᵢ, Tᵢ) von den Sollwertepaaren (n_{Soll}, Tsoii) eine maximale vorbestimmte Abweichung übersteigt und
e. Erfassung einer Zwischenkreisspannung und eines Zwischenkreisstroms
f. Auswertung der Abweichung der Ist-Wertpaare (nᵢ, Tᵢ) von den Sollwertepaaren (n_{Soll}, Tsoii) sowie der Zwischenkreisspannung und des Zwischenkreisstroms zur Ermittlung eines Grades der Filterverschmutzung.

## Patentansprüche

1. Detektionsverfahren zum Ermitteln einer Filterverschmutzung einer Filteranlage bestehend aus wenigstens einem in einer Luftführung (20) installierten Luftfilter (10) und einem elektrisch mittels einer PWM-Ansteuerung (32) angesteuerten Ventilator (30) zum Erzeugen eines Luftstroms in der Luftführung (20), wobei eine Motorsteuerung (40) und eine Auswerteeinrichtung (50) vorgesehen sind, mit den folgenden Schritten:
a. Ermitteln einer Ist-Drehzahl (nᵢ) des Ventilators (30) und
b. Ermitteln eines Ist-Aussteuergrades (Tᵢ) des Motorstroms zur Erzielung der Ist-Drehzahl (nᵢ) und
c. Vergleich der Ist-Wertepaare (nᵢ, Tᵢ) mit hinterlegten Sollwertepaaren (n_{Soll}, Tsoii) und
d. Bestimmung ob eine Abweichung der Ist-Wertepaare (nᵢ, Tᵢ) von den Sollwertepaaren (n_{Soll}, T_{Soll}) eine maximale vorbestimmte Abweichung übersteigt und
e. Erfassung einer Zwischenkreisspannung und eines Zwischenkreisstroms
f. Auswertung der Abweichung der Ist-Wertpaare (nᵢ, Tᵢ) von den Sollwertepaaren (n_{Soll}, T_{Soll}) sowie der Zwischenkreisspannung und des Zwischenkreisstroms zur Ermittlung eines Grades der Filterverschmutzung.

2. Detektionsverfahren nach Anspruch 1, wobei die Meldung eines verschmutzten Luftfilters (10) bei Überschreiten der maximalen Abweichung der Ist-Wertepaare von den SollWertepaaren als Signal ausgegeben wird.

3. Detektionsverfahren nach einem der vorhergehenden Ansprüche, wobei die Drehrichtung des Ventilators für eine definierte Zeit gegenüber der bestimmungsgemäßen Drehrichtung umgekehrt wird und dabei der Ist-Aussteuerungsgrad, die Ist-Drehzahl und der Zwischenkreisstrom und die Zwischenkreisspannung kontinuierlich aufgezeichnet werden.

## Claims

1. A method for detecting filter clogging in a filter system comprising at least one air filter (10) arranged in an air duct (20) and a fan (30) electrically controlled by means of a PWM control (32) for generating an air flow in the air duct (20), wherein a motor control (40) and an evaluation device (50) are provided, comprising the following steps:
a. Determining an actual rotational speed (ni) of the fan (30) and
b. Determining an actual degree of modulation (Tᵢ) of the motor current in order to achieve the actual rotational speed (nᵢ), and
c. Comparing the actual value pairs (nᵢ, Tᵢ) with stored setpoint value pairs (n_{Soll}, T_{Soll}) and
d. Determining whether a deviation of the actual value pairs (nᵢ, Tᵢ) from the setpoint value pairs (n_{Soll}, T_{Soll}) exceeds a maximum predetermined deviation and
e. Detection of a DC link voltage and a DC link current
f. Evaluation of the deviation of the actual value pairs (nᵢ, Tᵢ) from the setpoint value pairs (n_{Soll}, T_{Soll}) and of the DC link voltage and the DC link current to determine a degree of filter clogging.

2. Method for detecting according to claim 1, wherein the indication of a clogged air filter (30) is output as a signal when the maximum deviation of the actual pairs from the setpoint value pairs.

3. Method for detecting according to any one of the preceding claims, wherein the direction of rotation of the fan is reversed for a defined time with respect to the intended direction of rotation and the actual degree of modulation, the actual rotational speed and the DC link current and the DC link voltage are thereby continuously recorded.

## Revendications

1. Procédé de détection permettant d'établir un encrassement de filtre d'une installation de filtration composée d'au moins un filtre à air (10) installé dans un conduit d'air (20) et d'un ventilateur (30) piloté électriquement au moyen d'un pilotage MIL (32) pour générer un flux d'air dans le conduit d'air (20), dans lequel une commande de moteur (40) et un dispositif d'évaluation (50) sont prévus, comprenant les étapes suivantes consistant à :
a) établir une vitesse de rotation réelle (nᵢ) du ventilateur (30), et
b) établir un degré de modulation réel (Tᵢ) du courant de moteur pour atteindre la vitesse de rotation réelle (nᵢ), et
c) comparer les paires de valeurs réelles (nᵢ, Tᵢ) avec des paires de valeurs théoriques (nₛₒₗₗ, Tₛₒₗₗ) mémorisées, et
d) déterminer si un écart des paires de valeurs réelles (nᵢ, Tᵢ) par rapport aux paires de valeurs théoriques (nₛₒₗₗ, Tₛₒₗₗ) dépasse un écart prédéterminé maximal, et
e) détecter une tension de circuit intermédiaire et un courant de circuit intermédiaire,
f) évaluer l'écart des paires de valeurs réelles (nᵢ, Tᵢ) par rapport aux paires de valeurs théoriques (nₛₒₗₗ, Tₛₒₗₗ) ainsi que la tension de circuit intermédiaire et le courant de circuit intermédiaire pour établir un degré de l'encrassement de filtre.

2. Procédé de détection selon la revendication 1, dans lequel l'annonce d'un filtre à air (10) encrassé est émise sous forme de signal en cas de dépassement de l'écart maximal des paires de valeurs réelles par rapport aux paires de valeurs théoriques.

3. Procédé de détection selon l'une quelconque des revendications précédentes, dans lequel le sens de rotation du ventilateur est inversé par rapport au sens de rotation prévu pendant un temps défini, et en même temps, le degré de modulation réel, la vitesse de rotation réelle et le courant de circuit intermédiaire et la tension de circuit intermédiaire sont enregistrés en continu.
